Europäisches Patentamt

European Patent Office

Office européen des brevets

(11) Veröffentlichungsnummer : **0 128 330**
**B1**

(12) EUROPÄISCHE PATENTSCHRIFT

(45) Veröffentlichungstag der Patentschrift :
27.07.88

(51) Int. Cl.⁴ : **B 25 J   3/02**

(21) Anmeldenummer : **84105003.2**

(22) Anmeldetag : **03.05.84**

(54) **Vorrichtung zur Erzeugung einer geradlinigen Bewegung bei Handhabungsgeräten.**

(30) Priorität : **13.05.83 DE 3317443**

(43) Veröffentlichungstag der Anmeldung :
**19.12.84 Patentblatt 84/51**

(45) Bekanntmachung des Hinweises auf die Patenterteilung : **27.07.88 Patentblatt 88/30**

(84) Benannte Vertragsstaaten :
**AT BE CH DE FR GB IT LI LU NL SE**

(56) Entgegenhaltungen :
**EP-A- 0 074 830**
**CH-A-   380 469**
**DE-A- 2 938 767**
**GB-A- 2 091 836**

(73) Patentinhaber : **Schwarz, Friedhelm**
**Hornstrasse 19**
**D-4390 Gladbeck (DE)**

(72) Erfinder : **Schwarz, Friedhelm**
**Hornstrasse 19**
**D-4390 Gladbeck (DE)**

(74) Vertreter : **Radünz, Ingo, Dipl.-Ing.**
**Eduard-Schloemann-Strasse 47**
**D-4000 Düsseldorf 1 (DE)**

**Beschreibung**

Die Erfindung betrifft einen Manipulator mit einem Gelenkarm zur Erzeugung einer geradlinigen Bewegung mit den Merkmalen des Oberbegriffes des Anspruches 1.

Bei einem bekannten Manipulator (CH-A-380 469) dient als Verbindungsstück zwischen den beiden Hebel-Parallelogrammen ein einzelner Lenker, der an den beiden freien Enden mit je einem der Hebel eines jeden Hebel-Parallelogrammes verbunden ist. Dieser Lenker vermag sich in den meisten Stellungen des Manipulators nicht genau parallel zur Arbeitslinie zu stellen. Damit ist eine Geradführung zur höhenkonstanten Überbrückung größerer Reichweiten oder geradlinig vertikaler Hubhöhen mit großer Genauigkeit nicht möglich. Weiterhin sind Manipulatoren mit Hebelparallelogrammen bekannt (GB-A-2 091 836, DE-A-2 938 767), an die die Antriebe über verschiebbare Rahmen oder Zahnradsegmente direkt angreifen. Solche Anordnungen lassen keine Übertragung größerer Kräfte zu und sind daher nicht für größere Lasten und größere Hübe geeignet, die zwangsweise zu größeren Übertragungskräften führen.

Der Erfindung liegt die Aufgabe zugrunde, eine einfache und sichere Vorrichtung zu schaffen, mit deren Hilfe es möglich ist, eine geradlinige Bewegung über größere Wege auszuführen und größere Kräfte zu übertragen. Diese Aufgabe wird bei einem gattungsgemäßen Manipulator erfindungsgemäß durch die kennzeichnenden Merkmale des Anspruches 1 gelöst. Vorteilhafte Ausgestaltungen der Erfindung sind in den Unteransprüchen angegeben.

Über das zweifache Koppelgestänge können größere Kräfte übertragen werden. Die geometrischen Verhältnisse an den Angriffspunkten des Koppelgestänges an den Hebeln sind so gewählt, daß eine im wesentlichen geradlinige, höhenkonstante oder vertikale Bewegung der Endpunkte des zweiten Hebelparallelogramms erreicht wird.

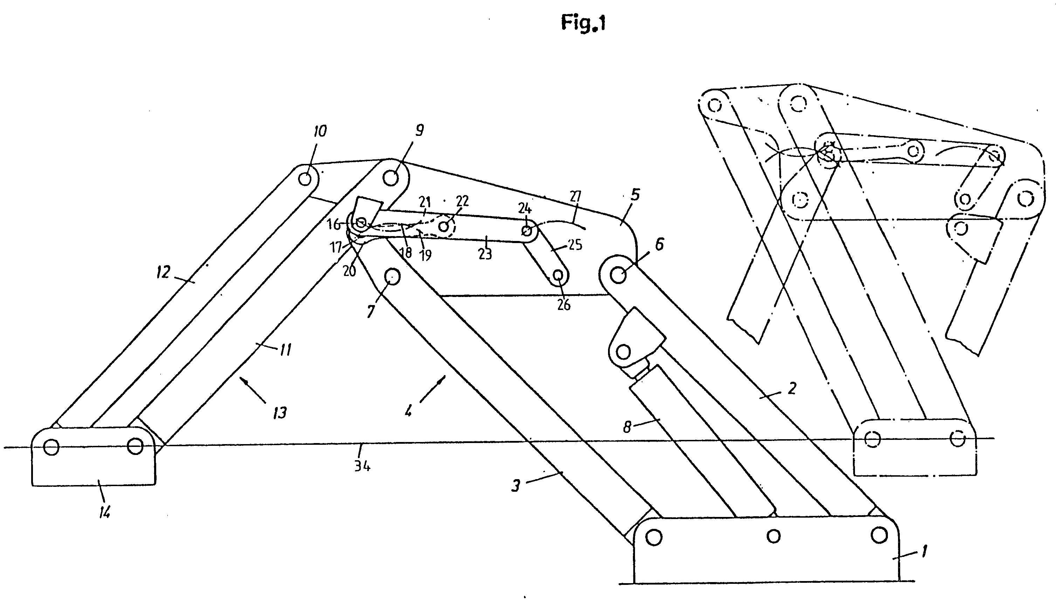

Mehrere Ausführungsbeispiele der Erfindung sind in der Zeichnung dargestellt und werden im folgenden näher erläutert. Die Fig. 1 bis 3 zeigen das Schema verschiedener Ausführungsformen einer Vorrichtung gemäß der Erfindung.

Von einem Manipulator, der eine Chargiermaschine für einen Hüttenbetrieb darstellen kann, ist nur das Knickarmsystem dargestellt. Dieses Knickarmsystem enthält eine Grundplatte 1, die auf dem Manipulator fest angeordnet ist. Auf der Grundplatte 1 sind schwenkbar die Hebel 2, 3 eines ersten Hebel-Parallelogrammes 4 angeordnet. Die Enden der Hebel 2, 3 dieses ersten Hebel-Parallelogrammes 4 sind an einem Zwischenstück 5 befestigt und um die Drehpunkte 6, 7 schwenkbar.

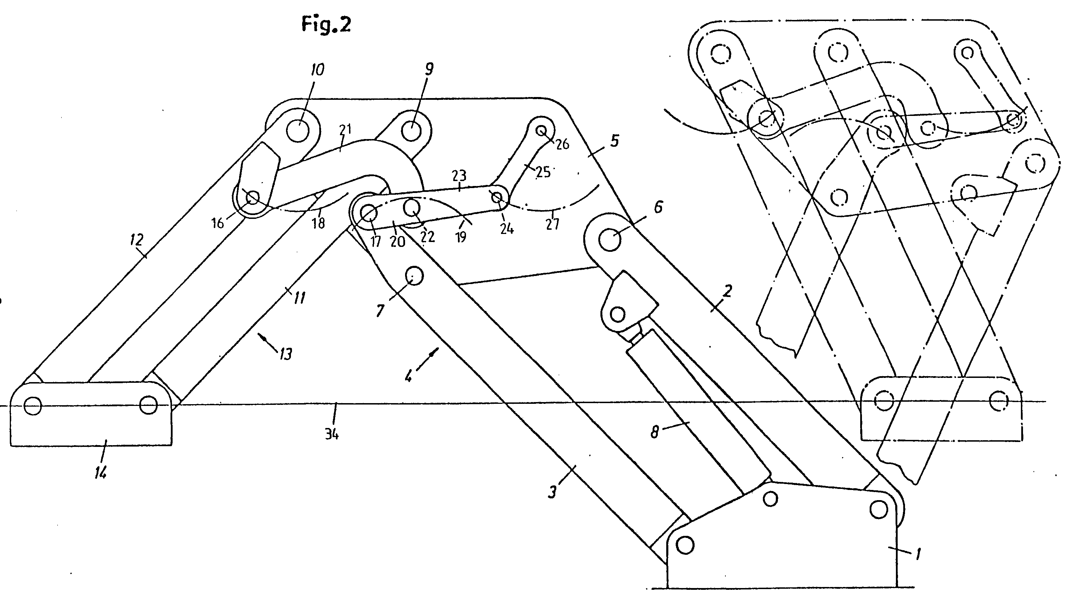

Das erste Hebel-Parallelogramm 4 ist abgetrieben. Zu diesem Zweck ist ein Verstellantrieb 8 vorgesehen, der aus einem Hydraulikzylinder oder aus einem Spindel- oder sonstigen Antrieb bestehen kann. Der Verstellantrieb 8 ist nach Fig. 1 und 2 schwenkbar mit einem der Hebel 2, 3 des ersten Hebel-Parallelogrammes 4 und mit der Grundplatte 1 verbunden ist. Die Längsachsen der Hebel 2, 3 und des Verstellantriebes 8 stehen vorteilhafterweise unter einem Winkel zueinander.

An dem Zwischenstück 5 sind in den Drehpunkten 9, 10 die Hebel 11, 12 eines zweiten Hebel-Parallelogrammes 13 gehalten. Die Enden der Hebel 11, 12 dieses zweiten Hebel-Parallelogrammes 13 sind schwenkbar mit einer Werkzeugplatte 14 verbunden, die beispielsweise einen Greifer trägt. Sowohl dem zweiten Hebel-Parallelogramm 13 als auch dem ersten Hebel-Parallelogramm 4 ist ein weiteres Hebel-Parallelogramm zugeordnet, so daß beide Hebel-Parallelogramme 4, 13 paarweise vorhanden sind. Über ein nachfolgend beschriebenes Koppelgestänge wird die Bewegung des ersten Hebel-Parallelogramms 4 auf das zweite Hebel-Parallelogramm 13 übertragen. Die gestrichelten Linien in den Fig. 1 bis 3 geben jeweils eine veränderte Stellung des Knickarmsystems wieder, wobei die Grundplatte 1 ortsfest bleibt und die Werkzeugplatte 14 entlang der im wesentlichen geraden Linie 34 bewegt wird.

Das Koppelgestänge enthält zwei Stangen 20, 21, die nach Art einer Schere über ein Gelenk 22 miteinander verbunden sind. Das freie Ende der einen Stange 20 greift gelenkig in dem Angriffspunkt 17 an einen Hebel 3 des ersten Hebel-Parallelogrammes 4, und das freie Ende der anderen Stange 21 greift gelenkig in dem Angriffspunkt 16 an den Hebel 11 des zweiten Hebel-Parallelogrammes 13 an. Die Angriffspunkte 16, 17 liegen in einem unter sich gleichen Abstand von den Drehpunkten 7, 9 der mit den Stangen 20, 21 verbundenen Hebel 3, 11.

Die eine Stange 21 ist über das Gelenk 22 hinaus um einen Abschnitt 23 verlängert. Dieser Abschnitt 23 ist über ein weiteres Gelenk 24 mit einer Lasche 25 verbunden, die in einem Drehpunkt 26 schwenkbar an dem Zwischenstück 5 befestigt ist. Die Länge der Lasche 25 zwischen dem weiteren Gelenk 24 und dem Drehpunkt 26 entspricht der Entfernung der Angriffspunkte 16, 17 der Stangen 20, 21 von den Drehpunkten 7, 9 der Hebel 3, 11. Ferner sind die Abstände zwischen dem Gelenk 22 der Stangen 20, 21 einerseits und dem weiteren Gelenk 24 zwischen dem verlängerten Abschnitt 23 der Stange 21 und der Lasche 25 sowie den Angriffspunkten 16, 17 der Stangen 20, 21 an den Hebeln 3, 11 andererseits jeweils untereinander gleich.

Bei einer Bewegung des Hebels 3 des ersten Hebel-Parallelogrammes 4 öffnet oder schließt sich die scherenartige Verbindung der Stangen 20, 21, so daß die Angriffspunkte 16, 17 der Stangen 20, 21 an den Hebeln 3, 11 sowie das Gelenk 24 zwischen der einen Stange 21 und der Lasche 25 die durch die Kreisbögen 18, 19, 27 angedeuteten Bewegungen ausführen. Dabei bewegt sich das Gelenk 22 nahezu auf einer neutralen Linie. Dank der beschriebenen Ausbildung des aus den Stangen 20, 21 und der Lasche 25 bestehenden zweifachen Koppelgestänges wird die durch das angetriebene, erste Hebel-Parallelogramm 4 eingeleitete Bewegung so auf das zweite Hebel-Parallelogramm 13 übertragen, daß die Werkzeugplatte 14 am Ende des zweiten Hebel-Parallelogrammes 13 eine im wesentlichen geradlinige Bewegung ausführt. Diese Bewegung ist bei der dargestellten Vorrichtung eine höhenkonstante Horizontalbewegung. Durch eine Versetzung des Knickarmsystems kann mit den gleichen Mitteln auch eine im wesentlichen geradlinig vertikale Hubhöhe überwunden werden.

Bei dem in Fig. 2 dargestellten Knickarmsystem sind wiederum die Abstände der Angriffspunkte 16, 17 der Stangen 20, 21 von den auf dem Zwischenstück 5 liegenden Drehpunkten 7, 10 der mit diesen Stangen 20, 21 verbundenen Hebel 3, 12 untereinander gleich lang, wobei sie ferner mit der Länge der Lasche 25 zwischen dem Gelenk 24 und Drehpunkt 26 übereinstimmen. Abweichend von dem Knickarmsystem nach Fig. 1 ist die an den Hebel 3 angreifende Stange 20 verlängert und mit der Lasche 25 verbunden ist. Ferner sind die Längen der Stangen 20, 21 zwischen dem Gelenk 22 und den Angriffspunkten 16, 17 der Hebel 3, 11 ungleich lang. Hier stehen aber die Entfernungen zwischen dem Gelenk 22 der Stangen 20, 21 und den Angriffspunkten 16, 17 sowie die Länge der Stange 20 zwischen dem Angriffspunkt 17 und dem weiteren Gelenk 24 in einem bestimmten, rechnerisch zu ermittelnden Verhältnis zueinander. Diese Geometrie ergibt die im wesentlichen geradlinige Bewegung der Werkzeugplatte 14. Die Abweichung des Knickarmsystemes von der exakt geradlinigen Linie ist jedoch so gering, daß sie für die technische Betrachtung unerheblich ist. Der Vorteil der Ausführungsform nach Fig. 2 gegenüber derjenigen nach Fig. 1 liegt darin, daß man freier in der räumlichen Gestaltung des zweifachen Koppelgestänges ist. Eine platzsparende Ausbildung wird dadurch erreicht, daß die eine Stange 21 gekrümmt ist.

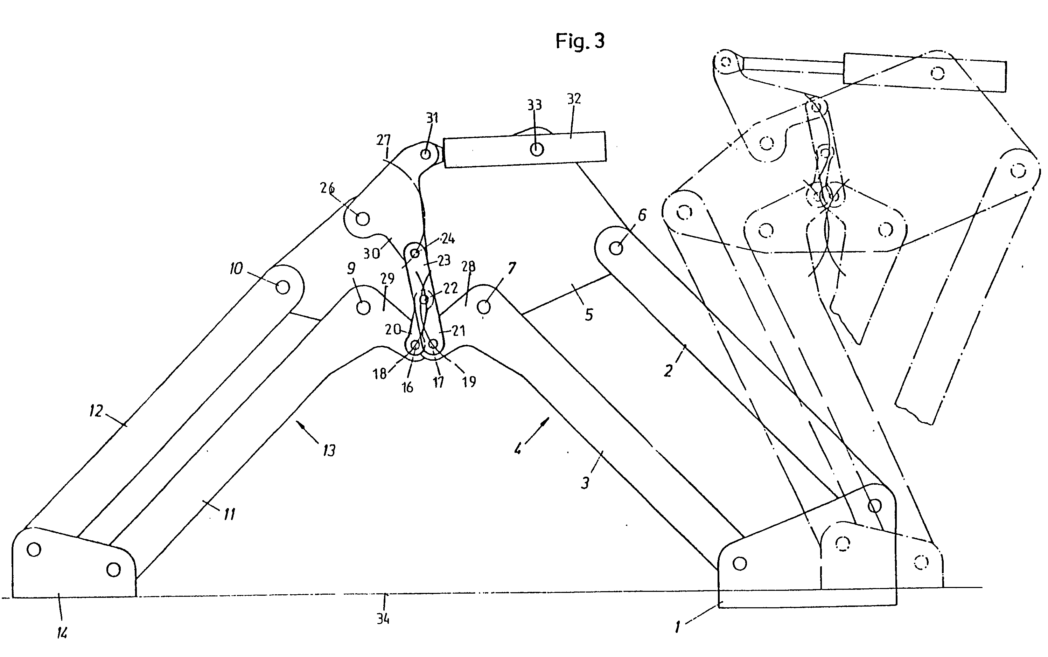

Bei dem Knickarmsystem nach Fig. 3 wird ein zweifaches Koppelgestänge wie nach Fig. 1 verwendet. In Abweichung von den bisher beschriebenen Knickarmsystemen sind hier die Drehpunkte 7, 9 der mit den Stangen 20, 21 verbundenen Hebel 3, 11 nicht vertikal übereinander, sondern waagerecht nebeneinander auf dem Zwischenstück 5 vorgesehen. Hierbei liegt dann das Koppelgestänge nicht mehr im wesentlichen parallel, sondern im wesentlichen rechtwinklig zur Bewegungslinie 34 der Werkzeugplatte 14. Zu diesem Zweck sind die Hebel 3, 11 an ihren oberen Enden abgewinkelt, wobei die Angriffspunkte 16, 17 der Stangen 20, 21 auf diesen abgewinkelten Endstücken 28, 29 der Hebel 3, 11 liegen.

Das im wesentlichen senkrecht zur Bewegungslinie 34 angeordnete, aus den Stangen 20, 21 bestehende Koppelgestänge kann, wie zu den Fig. 1 und 2 erläutert, mit einer Lasche verbunden sein. Nach Fig. 3 ist die Lasche durch ein Formstück 30 ersetzt, das in dem Drehpunkt 26 schwenkbar auf dem Zwischenstück 5 angeordnet ist. Das Formstück 30 ist über das Gelenk 24 mit dem verlängerten Abschnitt 23 der Stange 21 verbunden. Die Entfernung zwischen dem Gelenk 24 und dem Drehpunkt 26 des Formstückes 30 entspricht auch bei dieser Ausführungsform dem Abstand der Angriffspunkte 16, 17 der Stangen 20, 21 von den Drehpunkten 7, 9 der Hebel 3, 11. Darüber hinaus enthält das Formstück 30 noch ein zusätzliches Gelenk 31, in dem ein anderer Verstellantrieb 32 für die Verstellung des Knickarmsystems angreift. Dieser Verstellantrieb 32 ist in dem Punkt 33 schwenkbar auf dem Zwischenstück 5 angeordnet. Bei diesem Knickarmsystem entfällt der mit einem der Hebel 2, 3 des ersten Hebel-Parallelogramms verbundene Stellantrieb.

## Patentansprüche

1. Manipulator mit einem Gelenkarm zur Erzeugung einer geradlinigen Bewegung bestehend aus zwei hintereinander angeordneten Hebel-Parallelogrammen (4, 13), die in einem Zwischenstück (5) schwenkbar gelagert und über ein Gestänge miteinander gekoppelt sind, das jeweils an einen Hebel (3, 11) eines der beiden Hebel-Parallelogramme (4, 13) in einem Abstand von den Drehpunkten (7, 9) der Hebel (3, 11) auf dem Zwischenstück (5) gelenkig angreift, wobei die Abstände zwischen den Drehpunkten (7, 9) und den Angriffspunkten (16, 17) gleich groß sind, dadurch gekennzeichnet, daß das Gestänge zwei Stangen (20, 21) umfaßt, die in einem Gelenk (22) miteinander verbunden sind und mit den freien Enden an die Hebel (3, 11) angreifen und daß die eine Stange (21) über das Gelenk (22) hinaus verlängert und mit ihrem verlängerten Abschnitt (23) an eine Lasche (25) angelenkt ist, die ihrerseits schwenkbar an dem Zwischenstück (5) befestigt ist, wobei der Abstand zwischen dem Gelenk (24) und dem Drehpunkt (26) der Lasche (25) dem Abstand zwischen den Drehpunkten (7, 9) der Hebel (3, 11) und den Angriffspunkten (16, 17) der Stangen (16, 17) entspricht.

2. Manipulator nach Anspruch 1, dadurch gekennzeichnet, daß die Abstände zwischen dem Gelenk (22) der Stangen (20, 21) einerseits und dem weiteren Gelenk (24) zwischen dem verlängerten Abschnitt (23) der Stange (21) und der Lasche (25) sowie den Angriffspunkten (16, 17) der Stangen (20, 21) an den Hebeln (3, 11) andererseits jeweils untereinander gleich sind.

3. Manipulator nach den Ansprüchen 1 und 2, dadurch gekennzeichnet, daß die Abstände von dem Gelenk (22) der Stangen (20, 21) zu den Angriffspunkten (16, 17) der Stangen (20, 21) an den Hebeln (3, 12) und die Länge der einen Stange (20) zwischen dem Angriffspunkt (17) und dem weiteren Gelenk (24) in einem vorgegebenen Verhältnis zueinander stehen.

4. Manipulator nach einem oder mehreren der Ansprüche 1 bis 3, dadurch gekennzeichnet, daß die Drehpunkte (7, 9) der mit dem Gestänge verbundenen Hebel (3, 11, 12) auf dem Zwischenstück im wesentlichen vertikal übereinander angeordnet sind.

5. Manipulator nach einem oder mehreren der Ansprüche 1 bis 4, dadurch gekennzeichnet, daß die Drehpunkte (7, 9, 10) der mit dem Gestänge verbundenen Hebel (3, 11, 12) auf dem Zwischenstück im wesentlichen waagerecht nebeneinander angeordnet sind.

6. Manipulator nach einem oder mehreren der Ansprüche 1 bis 5, dadurch gekennzeichnet, daß an einen der Hebel (2, 3) des ersten Hebel-Parallelogrammes (4) ein gelenkig auf einer mit dem Hebel-Parallelogramm (4) verbundenen Grundplatte (1) angeordneter Verstellantrieb (8) angreift.

7. Manipulator nach Anspruch 6, dadurch gekennzeichnet, daß die Längsachse des Verstellantriebes (8) und des Hebels (2, 3) unter einem Winkel zueinander verlaufen.

8. Manipulator nach einem oder mehreren der Ansprüche 1 bis 5, dadurch gekennzeichnet, daß schwenkbar an dem Zwischenstück (5) ein Formstück (30) und ein Verstellantrieb (32) befestigt sind und daß das Formstück (30) mit diesem Verstellantrieb (32) und dem verlängerten Abschnitt (23) einer der Stangen (21) gelenkig verbunden ist.

## Claims

1. Manipulator with an articulated arm for the production of a rectilinear movement and consisting of two lever parallelograms (4, 13), which are arranged one behind the other, are pivotably mounted in an intermediate piece (5) and which are each coupled with the other through a linkage which engages articulatedly at a respective lever (3, 11) of one of both the lever parallelograms (4, 13) at a spacing from the rotational centres (7, 9) of the levers (3, 11) on the intermediate piece (5), wherein the spacings between the rotational centres (7, 9) and the engagement points (16, 17) are equally great, characterised thereby, that the linkage comprises two rods (20, 21) which are each connected with the other in a joint (22) and by the free ends engage at the levers (3, 11), and that the one rod (21) is prolonged beyond the joint (22) and articulated by its prolonged portion (23) at a strap (25), which in its turn is fastened pivotably at the intermediate piece (5), wherein the spacing between the joint (24) and the rotational centre (26) of the strap (25) corresponds to the spacing between the rotational centres (7, 9) of the levers (3, 11) and the engagement points (16, 17) of the rods (20, 21).

2. Manipulator according to claim 1, characterised thereby, that the spacings between the joint (22) of the rods (20, 21) on the one hand and the further joint (24) between the prolonged portion (23) of the rod (21) and the strap (25) as well as the engagement points (16, 17) of the rods (20, 21) at the levers (3, 11) are each equal to the other.

3. Manipulator according to the claims 1 and 2, characterised thereby, that the spacing from the joint (22) of the rods (20, 21) to the engagement points (16, 17) of the rods (20, 21) at the levers (3, 11) and the length of the one rod (20) between the engagement point (17) and the further joint (24) each stand in a given ratio to the other.

4. Manipulator according to one or more of the claims 1 to 3, characterised thereby, that the rotational centres (7, 9) of the levers (3, 11, 12) connected with the linkage are arranged one substantially vertically on the other on the intermediate piece.

5. Manipulator according to one or more of the claims 1 to 4, characterised thereby, that the rotational centres (7, 9, 10) of the levers (3, 11, 12) connected with the linkage are arranged one substantially horizontally beside the other on the intermediate piece.

6. Manipulator according to one or more of the claims 1 to 5, characterised thereby, that a displacing drive (8), which is articulatedly arranged on a base plate (1) connected with the first lever parallelogram (4), engages at one of the levers (2, 3) of the parallelogram (4).

7. Manipulator according to claim 6, characterised thereby, that the longitudinal axis of the displacing drive (8) and of the lever (2, 3) each extend at an angle to the other.

8. Manipulator according to one or more of the claims 1 to 5, characterised thereby, that a shaped part (30) and a displacing drive (32) are pivotably fastened at the intermediate piece (5) and that the shaped part (30) is connected articulatedly with this resetting drive (32) and the prolonged portion (23) of one of the rods (21).

## Revendications

1. Manipulateur comportant un bras articulé pour la création d'un mouvement rectiligne constitué de deux parallélogrammes à levier (4, 13) disposés l'un derrière l'autre lesquels sont positionnés de manière pivotante dans un élément intermédiaire (5) et accouplés mutuellement par une tringlerie articulée respectivement à un levier (3, 11) de l'un des parallélogrammes (4, 13) à une distance des points de rotation (7, 9) des leviers (3, 11) sur la pièce intermédiaire (5), les distances entre lesdits points de rotation (7, 9) et les points de prise (16, 17) étant identiques, caractérisé par le fait que la tringlerie est constituée de deux tringles (20, 21) qui sont reliées l'une à l'autre dans une articulation (22) et agissent par leurs extrémités libres sur les leviers (3, 11) et par le fait que l'une des tringles (21) s'étend au-delà de l'articulation (22) et articulée, par sa section prolongée (23), sur une éclisse (25) fixée de manière à pouvoir pivoter sur la pièce intermédiaire (5), la distance entre l'articulation (24) et le point de rotation (26) de l'éclisse (25) correspondant à la distance entre les points de rotation (7, 9) des leviers (3, 11) et des points de prise (16, 17) des tringles (16, 17).

2. Manipulateur selon la revendication 1, caractérisé par le fait que les distances entre l'articulation (22) des tringles (20, 21) d'une part, et l'articulation (24) entre la section prolongée (23) de la tringle (21) et de l'éclisse (25) ainsi que des points de prise (16, 17) des tringles (20, 21) sur les leviers (3, 11) d'autre part, sont identiques.

3. Manipulateur selon les revendications 1 et 2, caractérisé par le fait que les distances entre l'articulation (22) des tringles (20, 21) et les points de prise (16, 17) des tringles (20, 21) sur les leviers (3, 12) et la longueur de l'une des tringles (20) entre le point de prise (17) et l'autre articulation (24) se situent dans un rapport mutuel prédéterminé.

4. Manipulateur selon l'une ou plusieurs des revendications 1 à 3, caractérisé par le fait que les points de rotation (7, 9) des leviers (3, 11, 12) reliés à la tringlerie sont disposés verticalement l'un au-dessus de l'autre sur la pièce intermédiaire.

5. Manipulateur selon l'une ou plusieurs des revendications 1 à 4, caractérisé par le fait que les points de rotation (9, 10) des leviers (3, 11, 12) reliés à la tringlerie sont disposés horizontalement côte à côte sur la pièce intermédiaire.

6. Manipulateur selon l'une ou plusieurs des revendications 1 à 5, caractérisé par le fait que sur l'un des leviers (2, 3) du premier parallélogramme (4) fait prise un entraînement (8) disposé de manière articulée sur une plaque de base (1) reliée au parallélogramme (4).

7. Manipulateur selon la revendication 6, caractérisé par le fait que l'axe longitudinal de l'entraînement (8) et celui du levier (2, 3) forment un certain angle mutuel.

8. Manipulateur selon l'une ou plusieurs des revendications 1 à 5, caractérisé par le fait qu'une pièce moulée (30) et un entraînement (32) sont fixés de manière pivotante sur la pièce intermédiaire (5) et que la pièce moulée (30) est reliée de manière articulée à cet entraînement (32) et le prolongement (23) de l'une des tringles (21).

**Fig.1**

0 128 330

Fig.2

Fig. 3